# EUROPÄISCHE PATENTSCHRIFT

(11) **EP 3 329 167 B1**
(45) Veröffentlichungstag und Bekanntmachung des Hinweises auf die Patenterteilung: **15.05.2019**
(21) Anmeldenummer: 16733311.1
(22) Anmeldetag: 08.06.2016
(51) Int. Cl.: F16L 11/15, F01N 13/18, F16L 11/16, F16L 11/20, F16L 27/10, F16L 27/11, F16L 51/02, F16L 55/04, B21C 37/12, F16L 27/111, B32B 7/04, B32B 1/08, B32B 3/14, B32B 3/18

(54) **LEITUNGSELEMENT MIT EINEM INNENELEMENT UND EINEM AUSSENELEMENT**
LINE ELEMENT HAVING AN INNER ELEMENT AND AN OUTER ELEMENT
ÉLÉMENT DE CONDUIT POURVU D'UN ÉLÉMENT INTERNE ET D'UN ÉLÉMENT EXTERNE

(30) Priorität: 30.07.2015 DE 102015112535; 16.03.2016 DE 102016104885
(43) Veröffentlichungstag der Anmeldung: 06.06.2018
(73) Patentinhaber: WESTFALIA Metallschlauchtechnik GmbH & Co. KG, 57271 Hilchenbach (DE)
(72) Erfinder: SCHENK, Karsten, 34613 Schwalmstadt (DE); SELTER, Oliver, 57439 Attendorn (DE); WEISS, Matthias, 57271 Hilchenbach (DE); HAUK, Stefan, 57271 Hilchenbach (DE); BAUMHOFF, Dietmar, 57462 Olpe (DE); MÜNKER, Karl-Heinz, 57271 Hilchenbach (DE); HENKELMANN, Michael, 57271 Hilchenbach (DE); GERHARD, Andreas, 57482 Wenden (DE)
(74) Vertreter: Beckmann, Jürgen
(86) Internationale Anmeldenummer: PCT/EP2016/063012
(87) Internationale Veröffentlichungsnummer: WO 2017/016728

(56) Entgegenhaltungen:
- EP-A2- 0 436 772
- DE-A1-102012 013 946
- DE-A1-102013 105 891
- DE-C1- 19 531 796
- US-A1- 2003 159 745

## Beschreibung

Die Erfindung betrifft ein Leitungselement bestehend aus einem Innen- und Außenelement. Derartige Leitungselemente werden vorzugsweise in Abgasleitungen in Kraftfahrzeugen verbaut und verbinden einzelne, starre Leitungseinheiten flexibel miteinander.

Im Abgasstrang von Kraftfahrzeugen entstehen stets Schwingungen, die meist durch Unwuchten von Rotationselementen im Motor, Turbo oder in Nebenaggregaten verursacht werden. Eine weitere Anregung von Schwingungen ist durch die pulsförmigen Druckverläufe des Verbrennungsmotors gegeben. Neben diesen höherfrequenten Schwingungen können Frequenzen im einstelligen und kleinen zweistelligen Hertz-Bereich durch die Fahrbewegungen in Verbindung mit Fahrbahn-Unebenheiten und deren Rückkopplung in das Fahrgestell angeregt werden.

Dabei haben die oben beschrieben Leitungselemente die Aufgabe, derartige Schwingungen und Bewegungen im Abgassystem von Kraftfahrzeugen zu entkoppeln. Zudem gleichen sie mögliche Einbautoleranzen aus.

Bei flexiblen Leitungselementen, welche unzureichend gedämpft sind, führen die im Betrieb in die Abgasanlage induzierten Schwingungen zu Eigenfrequenzanregung, welche in ausgeprägter Form sich lebendsauermindernd auf das flexible Leitungselement auswirken. Ihr Schwingungsverhalten ist dabei durch ihre Massen und Federsteifigkeiten charakterisiert. Im Fall von Metallbälgen mit symmetrisch zur Rotationsachse ausgebildeten Wellungen sind die zu den kleinen Eigenfrequenzen zugehörigen Eigenformen oftmals in der Balgstruktur stehende Longitudinalwellen, deren Anzahl von Schwingungsknoten mit der Ordnung der Eigenfrequenz wächst. Die Höhe dieser Eigenfrequenzen sinkt mit geringer werdender Steifigkeit. Deshalb liegen die Eigenfrequenzen solcher Bauteile in der Regel umso niedriger, je größer deren Durchmesser und Längen werden. Vor allem im Nutzfahrzeug-Bereich, in dem die Durchmesser und Längen der flexiblen Leitungselemente systembedingt größer sind, ist ein Einsatz von Metallbälgen ohne ein auf die spezielle Konfiguration angepasstes Dämpfungssystem nicht aussichtsreich.

Flexible Leitungselemente weisen unter Schwingbelastung demnach Dämpfungseinheiten auf, welche vorzugsweise auf Basis von Reibkontakt arbeiten. Dabei kommen vorrangig Metallgeflechte oder Metallgestricke zum Einsatz.

Aus der Patentschrift DE 196 41 963 C1 ist ein gedämpftes Leitungselement bekannt, welches im Außen- als auch im Innenbereich ein mit den Windungen des Leitungselementes über die gesamte Bauteillänge in Kontakt stehendes Metallgestricke aufweist. Dabei erstreckt sich der Kontaktbereich zwischen Leitungselement und Metallgeflecht in radialer Richtung voll umschließend.

Aus den Offenlegungsschriften DE 199 24 476 A1, DE 40 42 291 A1 und DE 10 2005 052 204 A1 sind durch ein äußeres Metallgeflecht gedämpfte Leitungselemente bekannt, bei dem ein Teil der Windungen mit dem Geflecht zur Erzeugung der Dämpfung im Reibschluss stehen, andere gezielt mit dem Geflecht form- oder kraftschlüssig verbunden sind. Der außen liegende sich über die gesamte Bauteillänge erstreckende Kontaktbereich ist in radialer Richtung voll umschließend. Die aus dem Stand der Technik bekannten Leitungselemente mit Dämpfung weisen dabei den Nachteil auf, dass für die Funktion der Dämpfung stets zusätzliche Bauteile im Leitungselement verbaut werden müssen, was eine Gewichts- und Materialzunahme bedeutet.

Des Weiteren ist aus der DE 199 13 562 A1 ein Flexschlauch bestehend aus einem äußeren Wellbalg und einem darin angeordneten Metallschlauch bekannt, die zur Dämpfung von Schwingungen miteinander in Kontakt stehen.

Aus der EP 436 772 A2 ist Leitungselement bekannt, bei dem sich ein Geflechtsschlauch zwischen einem innen gelegen Wickelschlauch und einem außen gelegenen Balg befindet.

Im Zuge des Leichtbaus liegt der Erfindung die Aufgabe zugrunde, einen Aufbau eines flexiblen und gedämpften Leitungselementes bereitzustellen, ohne nennenswerte Gewichts- und Materialzunahme in Folge zusätzlich verbauter Dämpfungselemente. Gleichzeitig soll das Leitungselement eine zuverlässige Funktion und eine lange Lebensdauer aufweisen.

Diese Aufgabe wird erfindungsgemäß durch Leitungselemente nach Anspruch 1 gelöst. Vorteilhafte Weiterbildungen dieser Leitungselemente sind in den Unteransprüchen enthalten.

Ein erfindungsgemäßes Leitungselement besteht aus einem Innenelement und einem Außenelement, welche punktuell, linienförmig, teilflächig oder vollflächig miteinander im Kontakt stehen. Dabei wird die Funktion der Dämpfung nicht separat durch Dämpfungselemente erfüllt, sondern im Innen- oder Außenelement integriert.

Im erfindungsgemäßen Leitungselement ist das Innenelement koaxial im Außenelement angeordnet.

Der "Reibkontaktschutz" dient dazu, Verschleiß durch die Reibung zwischen Innenelement und Außenelement zu minimieren. Insbesondere kann er ein Abtragen des Werkstoffs des Außenelementes im Kontaktbereich verhindern oder zumindest verringern. Dies kann beispielsweise durch eine geeignete Werkstoffauswahl und/oder Werkstoffbehandlung der sich kontaktierenden Schichten von Innenelement und Außenelement erreicht werden.

Optional kann des Weiteren eine Konditionierung einer oder beider Oberflächen (Innenelement, Außenelement) zur Anwendung kommen. Dabei bilden z.B. thermische oder thermochemische Diffusionsverfahren sowie Oberflächenbeschichtungsverfahren die Grundlage zur Erzeugung einer für die kontaktierenden Schichten erforderlichen Konditionierung eines der beiden Reibpartner. Beispielhafte aber in der Aufzählung nicht abschließende Verfahren sind:
Aufkohlung,
Kolsterisieren,
(Plasma-, Gas-, Salzbad-) Nitrieren,
Nitrocarburieren,
Carbonitieren,
Flammhärten,
Induktionshärten,
Laserhärten,
Plasmahärten,
chemischen Vernickeln,
Hartverchromung,
thermisches Spritzen,
Auftragsschweißen von Hart- oder Weichstoffschichten,
chemische Gasphasenabscheidung (CVD),
physikalische Gasphasenabscheidung (PVD),
Ionenimplantation,
und / oder Laserbehandlungsverfahren.

Die Reibschicht kann beispielsweise als Beschichtung oder in Form einer reiboptimierten Werkstoffauswahl ausgebildet werden. Von zwei Lagen des Leitungselementes kann insbesondere eine als Trägerschicht fungieren und die zweite Lage die Reibschicht (Verschleißträgerschicht) ausbilden.

Das erfindungsgemäße Leitungselement gemäß den beschriebenen zwei Ausführungsformen hat den Vorteil, dass durch den Kontakt zwischen Innenelement und Außenelement eine Dämpfung ohne zusätzliche Bauteile erfolgt, wobei durch den Reibkontaktschutz bzw. die Reibschicht eine Beschädigung des Außenelementes verhindert werden kann. Hierdurch erhält das Leitungselement eine hohe Funktionssicherheit und lange Lebensdauer.

Der mehrlagige Aufbau des Innenelements kann optional durch einen Bandstreifen erzeugt werden, der aus mehreren stoffschlüssig oder formschlüssig miteinander verbundenen Lagen besteht und zu einem Wickelschlauch gewickelt wird. Der Bandstreifen kann beispielsweise einen Kern aus einem harten Werkstoff aufweisen, der zumindest lokal mit einem anderen (weicheren) Werkstoff beschichtet ist und/oder dessen Oberfläche zumindest lokal behandelt worden ist.

Alternativ wird der mehrlagige Aufbau des Innenelements dadurch erreicht, dass es aus einem aus mehreren Bandstreifen gefertigten flexiblen Wickelschlauch besteht. Dabei werden zwei oder mehr (typischerweise gleich breite) Bandstreifen übereinandergelegt und gemeinsam als Paket den Umform- und Wickelprozessen für die Herstellung eines Wickelschlauches zugeführt. Eine stoffschlüssige Verbindung der Bandstreifen entsteht hierdurch in der Regel nicht.

Gemäß den vorstehenden Ausführungen kann die Reibschicht beispielsweise durch eine Oberflächenbeschichtung des Innenelementes, eine Konditionierung der Oberfläche des Innenelementes, und/oder durch einen von mehreren Bandstreifen gebildet werden.

Der Werkstoff der Reibschicht ist vorzugsweise reiboptimiert ausgewählt. Das heißt, dass die Reibung der Reibschicht mit dem Außenelement im Kontaktbereich hierzu in Bezug auf den Verschleiß (insbesondere des Außenelements) besser ist als es eine Reibung von zwei gleichen Werkstoffen für Reibschicht und Außenelement wäre. Insbesondere ist die Reibschicht weicher als der Werkstoff des Außenelementes (gemessen beispielsweise in den Verfahren HR oder HV nach Rockwell bzw. Vickers), so dass die Reibschicht und nicht das Außenelement durch den Reibkontakt abgetragen wird.

Die Reibschicht und/oder der Reibkontaktschutz und/oder ein Bandstreifen kann vorzugsweise mindestens einen der folgenden Werkstoffe enthalten oder hieraus bestehen:
Edelstahl,
Stahl,
Zink,
Zinkphosphat,
Aluminiumlegierungen,
Kupfer,
Titan,
Tantal,
Nickelbasislegierungen,
Graphit,
Aramide (z.B. Kevlar ®),
Messing,
Bronze
und/oder Molybdänsulfid.

Als Innenelement oder Außenelement finden verschiedene Ausführungsformen von Wickelschläuchen, Wickelbälgen, Wellbälgen oder im oberen Profilbereich verschweißte, rotationssymmetrische oder wendelgewellte Membranbälge Einsatz. Das Außenelement kann vorzugsweise aus einem Wellbalg, einer Membranbalg-struktur oder einer gewickelten Balgstruktur bestehen, die entweder zur Rotationsachse senkrecht ausgeprägte Wellungen oder spiralförmige Wellungen aufweisen. Eine gewickelte Balgstruktur kann vorzugsweise formschlüssig eingehakt oder überlappend oder stoffschlüssig verschweißt sein. Weiterhin kann das Außenelement mindestens einen der folgenden Werkstoffe enthalten oder hieraus bestehen:
Edelstahl,
Stahl,
Zink,
Aluminiumlegierungen,
Kupfer,
Titan,
Tantal,
Nickelbasislegierungen,
Messing,
und/oder Bronze

Vorzugsweise werden die sich im Kontaktbereich berührenden Werkstoffoberflächen von Außenelement und Innenelement aufeinander abgestimmt ausgewählt, um den Reibverschleiß zu verringern bzw. zu minimieren. Insbesondere wird dabei der betreffende Werkstoff des Innenelementes weicher als der des Außenelementes gewählt.

Gemäß einer Weiterbildung der Erfindung kann das Innenelement und/oder das Außenelement zumindest in einem axialen Abschnitt des Leitungselementes einen nicht kreisförmigen Querschnitt aufweisen. Insbesondere kann es einen mehreckigen Querschnitt haben, wobei die Ecken typischerweise abgerundet sind. Des Weiteren ist ein unrundes Innen-/Außenelement in der Regel mit einem runden Außen-/Innenelement kombiniert. Durch die Unrundheit kann auf einfache Weise ein Punkt-, Linien- oder Flächenkontakt hergestellt werden.

Weiterhin liegt der Innenschlauch vorzugsweise zumindest in einem axialen Abschnitt des Leitungselementes unter Spannung (das heißt mit einer Druckkraft) an der Innenwand des Außenschlauches an. Auf diese Weise wird gewährleistet, dass der Kontakt zwischen Innenschlauch und Außenschlauch auch bei eventuellen Bewegungen der Schläuche erhalten bleibt. Ferner kann durch die Höhe der Spannung das Dämpfungsverhalten beeinflusst werden.

Weitere Informationen zu Leitungselementen mit nicht-runden Innen- oder Außenschläuchen finden sich in der DE 10 2015 102 258 und DE 10 2012 013 946 A1, welche durch Bezugnahme vollumfänglich in die vorliegende Anmeldung aufgenommen werden.

Weitere Informationen zu Leitungselementen mit einer koaxialen Anordnung eines Innen- und eines Außenschlauches finden sich in der DE 20 2015 104 177 U1, welche durch Bezugnahme vollumfänglich in die vorliegende Anmeldung aufgenommen wird.

Im Folgenden wird die Erfindung mit Hilfe der Figuren beispielhaft näher erläutert. Dabei zeigt:
- Figur 1: einen Querschnitt durch den zweilagigen Bandstreifen eines erfindungsgemäßen Innenelementes;
- Figur 2: einen Querschnitt durch die Wand eines Innenelementes, das aus dem Bandstreifen von Figur 1 gewickelt ist;
- Figur 3: einen Querschnitt durch ein Leitungselement, welches ein Innenelement gemäß Figur 2 und ein Außenelement in Form eines im oberen Profilbereich verschweißten, rotationssymmetrischen oder wendelgewellten Membranbalgs aufweist;
- Figur 4: in einer Frontansicht ein Leitungselement mit einem ovalen Innenelement;
- Figur 5: in einer Frontansicht ein Leitungselement mit einem trigonalen Innenelement;
- Figur 6: in einer Frontansicht ein Leitungselement mit einem pentagonalen Innenelement;
- Figur 7: in einer Frontansicht ein Leitungselement mit einem tetragonalen Außenelement und einem runden Innenelement, welches an mindestens einem radialen Bereich direkt mit dem Außenelement in Reibkontakt steht;
- Figur 8: in einer Schnittdarstellung mögliche aber nicht abschließende Ausführungsformen von mehrlagigen Wickelschläuchen, welche als Innenelement oder als Außenelement Anwendung finden können;
- Figur 9: einen Querschnitt durch ein Leitungselement, bei dem das Innenelement ein mehrlagiger, agraffförmiger Wickelschlauch mit vorzugsweise 30 Prozent Streckung ist und das Außenelement aus einem Wellbalg besteht.

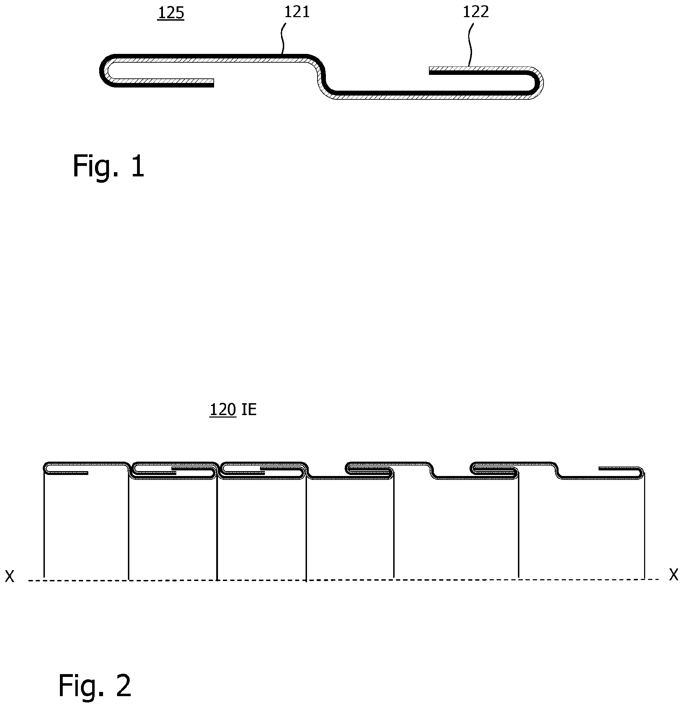

Figur 1 zeigt einen Querschnitt durch einen zweilagigen Bandstreifen 125, aus dem durch Wickeln und Einhaken der in Figur 2 dargestellte Wickelschlauch 120 hergestellt wird. Figur 2 zeigt dabei einen Schnitt durch die Wandung des Schlauches, welcher rotationssymmetrisch um die Schlauchachse X-X vorzustellen ist.

Der zweilagige Bandstreifen 125 besteht aus zwei parallel verlaufenden einzelnen Bandstreifen 121 und 122. Während des Herstellungsprozesses werden diese einzelnen Bandstreifen 121 und 122 übereinanderliegend angeordnet und gemeinsam verarbeitet, also profiliert und gewickelt. Dadurch entsteht zwischen den Bandstreifen 121 und 122 eine formschlüssige (jedoch in der Regel nicht stoffschlüssige) Verbindung.

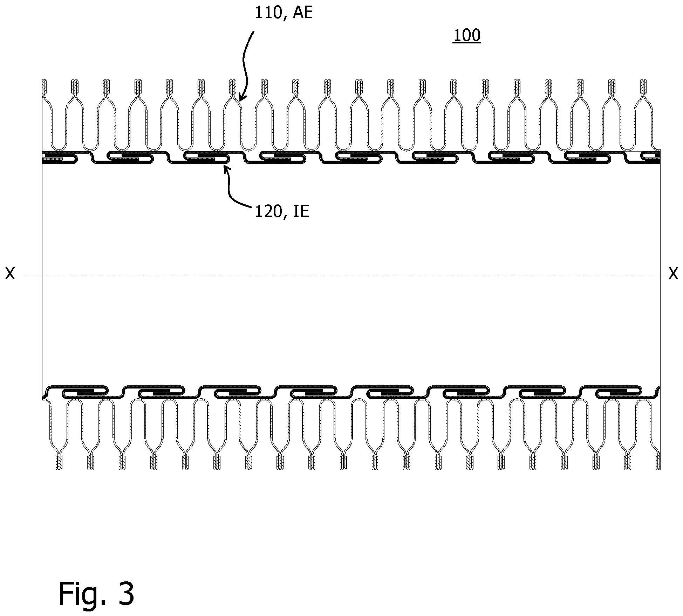

Figur 3 zeigt ein erfindungsgemäßes Leitungselement 100, das aus dem Wickelschlauch 120 als Innenelement (in den Figuren auch mit "IE" bezeichnet) und einem Außenelement 110 (in den Figuren auch mit "AE" bezeichnet) gebildet wird. Im dargestellten Beispiel ist das Außenelement AE ein im oberen Profilbereich verschweißter, rotationssymmetrischer oder wendelgewellter Membranbalg 110. Wie dargestellt berührt die Außenoberfläche des Innenelementes IE die Innenoberfläche des Außenelementes AE (zumindest in der dargestellten Schnittebene). Durch den Kontakt zwischen Innenelement IE und Außenelement AE wird eine effektive Schwingungsdämpfung des Leitungselementes 100 erreicht. Vorzugsweise findet der Kontakt dabei unter einer gewissen Vorspannung statt.

Im Wickelschlauch 120 liegt der Bandstreifen 121 an der radial äußersten Position, und im gestauchten Zustand des Wickelschlauches bildet er allein dessen Außenoberfläche. Im Leitungselement 100 kommt daher allein dieser Bandstreifen 121 als "Reibschicht" mit dem Außenelement AE in Kontakt. Erfindungsgemäß wird dieser Bandstreifen 121 reiboptimiert in Bezug auf das Außenelement AE gewählt. Insbesondere kann diese reiboptimierte Wahl so erfolgen, dass durch die Reibung zwischen Innenelement IE und Außenelement AE während des Betriebes des Leitungselementes 100 das Außenelement AE einem möglichst geringen Verschleiß unterliegt. Der Werkstoff des Bandstreifens 121 (bzw. zumindest seine Oberflächenschicht, falls er nicht aus einem einheitlichen Werkstoff besteht) wird daher in der Regel weicher gewählt als der Werkstoff des Außenelementes AE. Durch Reibung wird dann primär der Werkstoff des Innenelementes IE abgetragen. Der Bandstreifen 121 bildet somit im Ergebnis einen Reibkontaktschutz zwischen Innenelement IE und Außenelement AE.

Eine gewünschte bzw. erforderliche Stabilität kann dem Wickelschlauch 120 durch eine entsprechende Wahl des zweiten, inneren Bandstreifens 122 verliehen werden. Dieser kann insbesondere aus einem harten Werkstoff bestehen oder durch thermische Diffusionsprozesse eine harte Randschichtaufhärtung aufweisen.

Zu den typischen Werkstoffkombinationen sind beispielsweise aber in ihrer Aufzählung nicht abschließend gehörend:

| **äußerer Bandstreifen 121** | **innerer Bandstreifen 122** |
|---|---|
| Edelstahl 1.4016 | Edelstahl 1.4828 |
| Edelstahl 1.4016 | Nickelbasislegierungen |
| Messinglegierungen | Edelstahl 1.4828 |
| Messinglegierungen | Nickelbasislegierungen |
| Aluminium | Edelstahl 1.4301 |
| Aluminium | Nickelbasislegierungen |
| Graphit | Edelstahl 1.4301 |
| Graphit | Nickelbasislegierungen |

Sowohl das Innenelement IE als auch das Außenelement AE können im einfachsten Fall einen runden Querschnitt (senkrecht zur Schlauchachse) haben. Die Berührung zwischen den Elementen erfolgt dann flächig.

In bevorzugten Ausführungsformen hat das Innenelement IE oder das Außenelement AE indes einen unrunden Querschnitt (während das jeweils andere Element des Leitungselementes einen runden Querschnitt hat). Dann liegt in der Regel nur ein linienförmiger oder ggf. sogar nur punktförmiger Kontakt vor. Besonders bevorzugt ist es, wenn das Innenelement IE einen unrunden und das Außenelement AE einen runden Querschnitt hat.

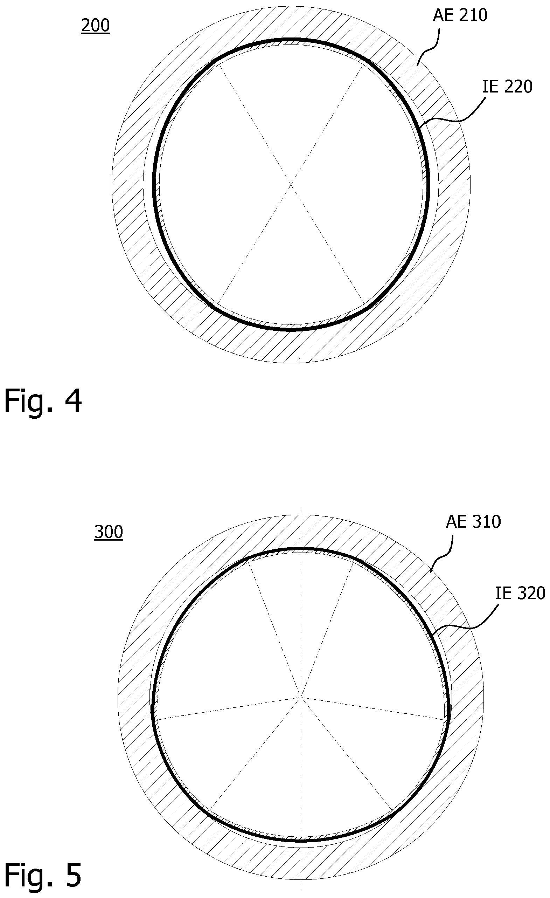

In Figur 4 ist diesbezüglich in einer Frontansicht ein Leitungselement 200 mit einem ovalen Innenelement 220 und einem kreisrunden Außenelement 210 dargestellt. Eine Berührung mit Reibkontakt findet zwischen axial verlaufenden und um 180° beabstandeten Linien statt.

In Figur 5 ist in einer Frontansicht ein Leitungselement 300 mit einem dreieckigen (trigonalen) Innenelement 320 und einem kreisrunden Außenelement 310 dargestellt. Eine Berührung mit Reibkontakt findet zwischen axial verlaufenden und um 120° beabstandeten Linien statt.

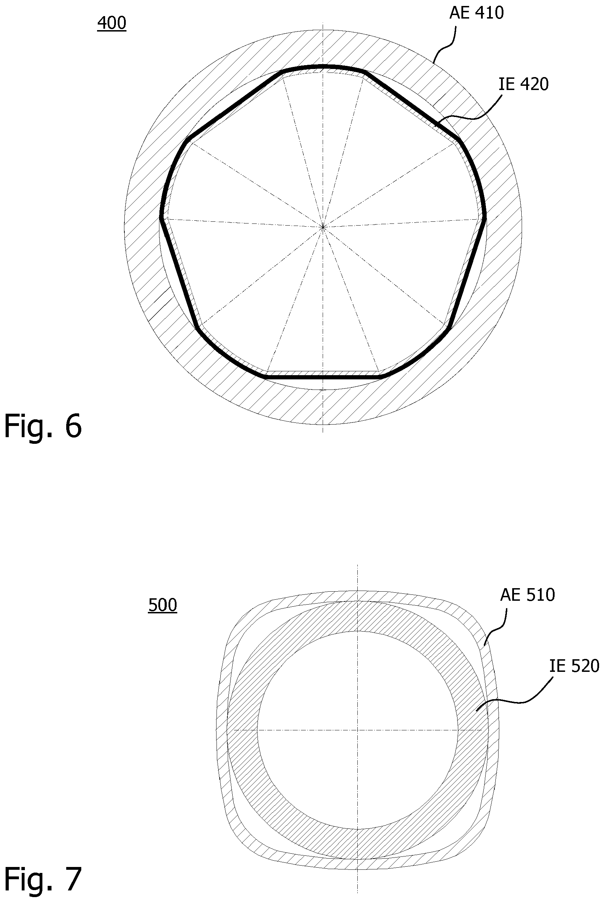

In Figur 6 ist in einer Frontansicht ein Leitungselement 400 mit einem pentagonalen Innenelement 420 und einem kreisrunden Außenelement 410 dargestellt. Eine Berührung mit Reibkontakt findet zwischen axial verlaufenden und um 72° beabstandeten Linien statt.

In Figur 7 ist in einer Frontansicht ein Leitungselement 500 mit einem tetragonalen Außenelement 510 und einem kreisrunden Innenelement 520 dargestellt. Eine Berührung mit Reibkontakt findet zwischen axial verlaufenden und um 90° beabstandeten Linien statt.

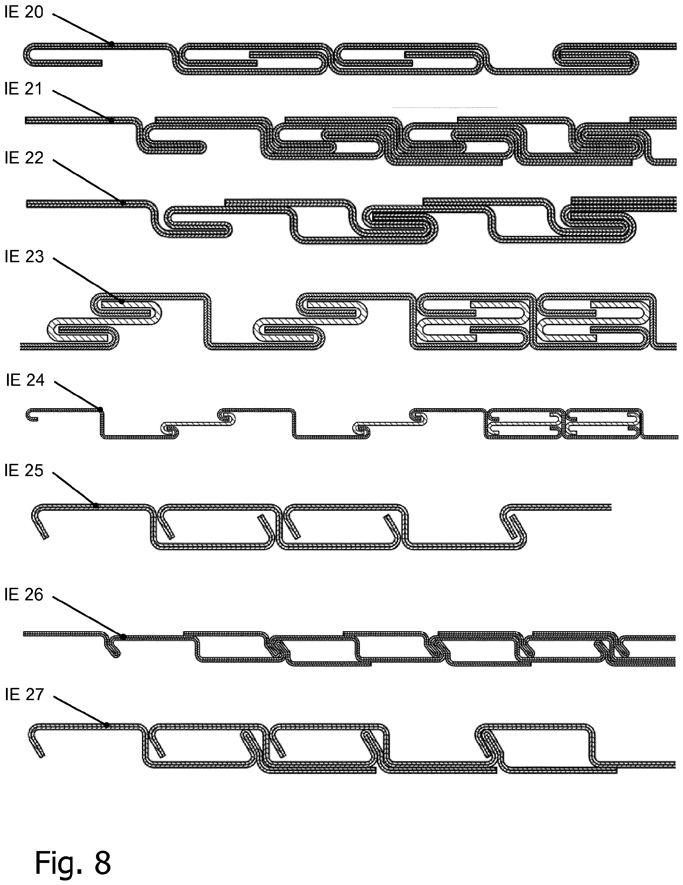

Figur 8 zeigt in einer Schnittdarstellung mögliche aber nicht abschließende Ausführungsformen von mehrlagigen Wickelschläuchen 20-27, welche als Innenelement IE (oder als Außenelement) Anwendung finden können. Insbesondere kann bei allen in den Figuren dargestellten Leitungselementen 100-600 das Innenelement IE durch einen der Wickelschläuche 20-27 gebildet werden. Beispielhaft dargestellt sind ein
- mehrlagiger, agraffförmiger Wickelschlauch 20,
- mehrlagiger Doppelschuppen-Wickelschlauch (DSS) 21,
- mehrlagiger Schuppen-Wickelschlauch (SSS) 22,
- mehrlagiger, agraffförmiger Wickelschlauch mit vorzugsweise 60 Prozent Streckung 23,
- mehrlagiger, agraffförmiger Wickelschlauch mit vorzugsweise 100 Prozent Streckung 24,
- mehrlagiger, eingehakter, agraffförmiger Wickelschlauch 25
- mehrlagiger, eingehakter Doppelschuppen-Wickelschlauch mit vorzugsweise 60 Prozent Streckung 26,
- mehrlagiger, eingehakter Schuppen-Wickelschlauch 27.

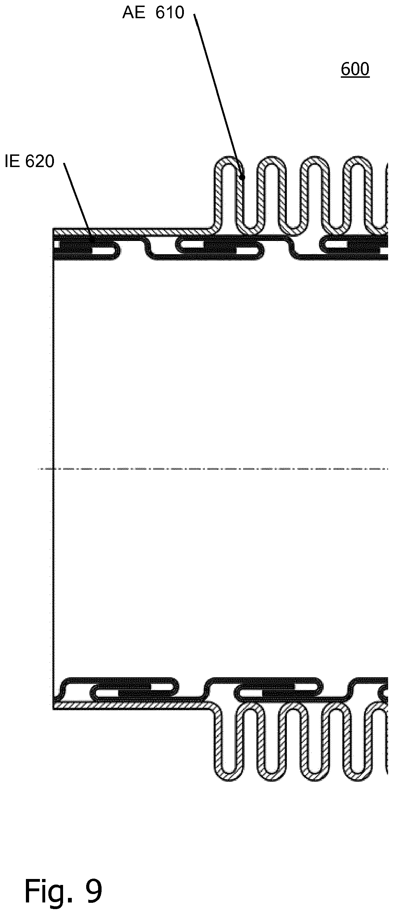

Figur 9 zeigt einen Querschnitt durch ein Leitungselement 600, bei dem das Innenelement IE ein mehrlagiger, agraffförmiger Wickelschlauch 620 mit vorzugsweise 30 Prozent Streckung ist und das Außenelement AE aus einem Wellbalg 610 besteht.

Bei allen in den Figuren dargestellten Leitungselementen 100-600 kann das Außenelement AE optional durch einen Wickelbalg, Wellbalg oder einen im oberen Profilbereich verschweißten, rotationssymmetrischen oder wendelgewellten Membranbalg gebildet werden. Beispiele für solche Außenelement AE finden sich in der DE 10 2008 001 297 A1, DE 10 2011 053 131 A1, und DE 10 2013 104 446 A1.

## Patentansprüche

1. Leitungselement (100-600) bestehend aus einem Innenelement (IE) und einem Außenelement (AE), wobei
- Innenelement (IE) und Außenelement (AE) punktuell, linienförmig, teil- oder vollflächig miteinander im Kontakt stehen,
- das Innenelement (IE) aus einem Wickelschlauch besteht, der einen mehrlagigen Aufbau hat, wobei eine der Lagen (121) im Kontaktbereich von Innenelement (IE) und Außenelement (AE) eine Reibschicht (121) ausbildet,
- das Außenelement (AE) aus einem Wellbalg, einer Membranbalgstruktur oder einer gewickelten Balgstruktur besteht, die entweder zur Rotationsachse senkrecht ausgeprägte Wellungen oder spiralförmige Wellungen aufweisen,
- im Kontaktbereich zwischen Innenelement (IE) und Außenelement (AE) der Werkstoff des Innenelementes (IE) weicher ist als der Werkstoff des Außenelementes (AE).

2. Leitungselement (100-600) nach Anspruch 1,
**dadurch gekennzeichnet, dass** der Werkstoff der Reibschicht (121) reiboptimiert ausgewählt ist.

3. Leitungselement (100-600) nach Anspruch 1 und/oder 2,
**dadurch gekennzeichnet, dass** das Innenelement (IE) aus einem aus mehreren Bandstreifen (121, 122) gefertigten flexiblen Wickelschlauch (120-620, 20-27) besteht.

4. Leitungselement (100-600) nach mindestens einem der vorhergehenden Ansprüche,
**dadurch gekennzeichnet, dass** die Reibschicht (121) und/oder ein Bandstreifen (121) mindestens einen der folgenden Werkstoffe enthält oder hieraus besteht: Edelstahl, Stahl, Zink, Zinkphosphat, Aluminium, Aluminiumlegierungen, Kupfer, Titan, Tantal, Keramik, Nickel, Nickelbasislegierungen, Graphit, Aramide, Messing, Bronze und/oder Molybdänsulfid.

5. Leitungselement (100-600) nach mindestens einem der vorhergehenden Ansprüche,
**dadurch gekennzeichnet, dass** das Außenelement (AE) mindestens einen der folgenden Werkstoffe enthält oder hieraus besteht: Edelstahl, Stahl, Zink, Aluminium, Aluminiumlegierungen, Nickelbasislegierung, Kupfer, Titan, Messing, Bronze und/oder Tantal.

6. Leitungselement (100-600) nach mindestens einem der vorhergehenden Ansprüche,
**dadurch gekennzeichnet, dass** die Reibschicht (121) und/oder ein Bandstreifen (121) und/oder das Außenelement (AE) zumindest lokal an einer Oberfläche konditioniert ist, insbesondere mittels eines thermischen oder thermochemischen Diffusionsverfahrens oder Oberflächenbeschichtungsverfahrens.

7. Leitungselement (100-600) nach mindestens einem der vorhergehenden Ansprüche,
**dadurch gekennzeichnet, dass** das Innenelement (IE) und/oder das Außenelement (AE) zumindest in einem axialen Abschnitt des Leitungselementes einen nicht kreisförmigen Querschnitt aufweist, vorzugsweise einen ovalen oder mehreckigen Querschnitt.

## Claims

1. Conducting element (100-600) consisting of an inner element (IE) and an outer element (AE), wherein
- inner element (IE) and outer element (AE) are in contact with each other at points, along a line, across a partial area or a full area,
- the inner element (IE) consists of a strip wound hose having a multilayer structure, wherein one of the layers (121) has a friction layer (121) in the contact area of inner element (IE) and outer element (AE),
- the outer element (AE) consists of a corrugated bellows, a diaphragm bellows or a wound bellows structure, having either corrugations formed perpendicularly to the rotation axis or spiral corrugations,
- in the contact area between inner element (IE) and outer element (AE) the material of the inner element (IE) is softer than the material of the outer element (AE).

2. Conducting element (100-600) according to claim 1,
**characterized in that** the material of the friction layer (121) is selected for optimized friction.

3. Conducting element (100-600) according to claim 1 and/or 2,
**characterized in that** the inner element (IE) consists of a flexible strip wound hose (120-620, 20-27) produced out of several tape strips (121, 122).

4. Conducting element (100-600) according to at least one of the preceding claims,
**characterized in that** the friction layer (121) and/or a tape strip (121) contains at least one of the following materials or consists out of it: stainless steel, steel, zinc, zinc phosphate, aluminium, aluminium alloys, copper, titanium, tantalum, ceramics, nickel, nickel-based alloys, graphite, aramids, brass, bronze and/or molybdenum sulfide.

5. Conducting element (100-600) according to at least one of the preceding claims,
**characterized in that** the outer element (AE) contains at least one of the following materials or consists out of it: stainless steel, steel, zinc, aluminium, aluminium alloys, nickel-based alloy, copper, titanium, brass, bronze and/or tantalum.

6. Conducting element (100-600) according to at least one of the preceding claims,
**characterized in that** the friction layer (121) and/or a tape strip (121) and/or the outer element (AE) is at least locally conditioned at one surface, in particular by means of a thermal or thermochemical diffusion process or a surface coating process.

7. Conducting element (100-600) according to at least one of the preceding claims,
**characterized in that** the inner element (IE) and/or the outer element (AE) has at least in one axial section of the conducting element a non-circular cross-section, preferably an oval or polygonal cross-section.

## Revendications

1. Élément conducteur (100-600) se composant d'un élément intérieur (IE) et un élément extérieur (AE), selon lequel
- l'élément intérieur (IE) et l'élément extérieur (AE) sont en contact l'un avec l'autre ponctuellement, linéairement, avec la surface partielle ou complète,
- l'élément intérieur (IE) se compose d'un tuyau flexible à bande enroulée en hélice, qui a une structure multicouche, selon laquelle l'une des couches (121) forme une couche de friction (121) dans la zone de contact entre l'élément intérieur (IE) et l'élément extérieur (AE),
- l'élément extérieur (AE) est composé d'un soufflet ondulé, d'une structure de soufflet à membrane ou d'une structure de soufflet enroulé, qui ont des ondulations soit perpendiculaires à l'axe de rotation ou des ondulations en spirale,
- dans la zone de contact entre l'élément intérieur (IE) et l'élément extérieur (AE) le matériau de l'élément intérieur (IE) est plus tendre que le matériau de l'élément extérieur (AE).

2. Élément conducteur (100-600) selon la revendication 1,
**caractérisé en ce que** le matériau de la couche de friction (121) est choisi de façon optimisée pour la friction.

3. Élément conducteur (100-600) selon la revendication 1 et/ou 2,
**caractérisé en ce que** l'élément intérieur (IE) se compose d'un tuyau flexible à bande enroulée en hélice (120-620, 20-27), qui est fait de plusieurs bandes (121, 122).

4. Élément conducteur (100-600) selon au moins l'une quelconque des revendications précédentes,
**caractérisé en ce que** la couche de friction (121) et/ou une bande (121) contient ou consiste en au moins un des matériaux suivants: acier inoxydable, acier, zinc, phosphate de zinc, aluminium, alliages d'aluminium, cuivre, titane, tantale, céramique, nickel, alliages à base de nickel, graphite, aramide, laiton, bronze et/ou sulfure de molybdène.

5. Élément conducteur (100-600) selon au moins l'une quelconque des revendications précédentes,
**caractérisé en ce que** l'élément extérieur (AE) contient ou consiste en au moins un des matériaux suivants: acier inoxydable, acier, zinc, aluminium, alliages d'aluminium, alliages à base de nickel, cuivre, titane, laiton, bronze et/ou tantale.

6. Élément conducteur (100-600) selon au moins l'une quelconque des revendications précédentes,
**caractérisé en ce que** la couche de friction (121) et/ou une bande (121) et/ou l'élément extérieur (AE) est conditionné au moins localement sur une surface, en particulier au moyen d'un procédé de diffusion thermique ou thermochimique ou d'un procédé de revêtement de surface.

7. Élément conducteur (100-600) selon au moins l'une quelconque des revendications précédentes,
**caractérisé en ce que** l'élément intérieur (IE) et/ou l'élément extérieur (AE) a au moins dans une section axiale de l'élément conducteur une section transversale non circulaire, de préférence une section transversale ovale ou polygonale.
